# EUROPÄISCHE PATENTSCHRIFT

(11) **EP 1 716 988 B1**
(45) Veröffentlichungstag und Bekanntmachung des Hinweises auf die Patenterteilung: **25.03.2009**
(21) Anmeldenummer: 06400018.5
(22) Anmeldetag: 19.04.2006
(51) Int. Cl.: B27B 31/00, B23D 59/00, B65G 59/02, B65H 1/18

(54) **Abstapelungsvorrichtung zum Abstapeln plattenförmiger Werkstücke**
Apparatus for destacking panel-shaped workpieces
Dispositif de désempilage de pièces en forme de plaque

(30) Priorität: 29.04.2005 DE 102005020977
(43) Veröffentlichungstag der Anmeldung: 02.11.2006
(73) Patentinhaber: HOLZMA Plattenaufteiltechnik GmbH, 75365 Calw-Holzbronn (DE)
(72) Erfinder: Kempf, Martin, 72202 Nagold (DE)
(74) Vertreter: Knapp, Thomas

(56) Entgegenhaltungen:
- EP-A- 1 473 665
- US-A- 4 431 358
- US-A- 5 040 196
- US-B1- 6 173 607
- PATENT ABSTRACTS OF JAPAN Bd. 008, Nr. 275 (P-321), 15. Dezember 1984 (1984-12-15) -& JP 59 142685 A (SUMITOMO JUKIKAI KOGYO KK), 15. August 1984 (1984-08-15)

## Beschreibung

### Stand der Technik

Die Erfindung betrifft eine Abstapelungsvorrichtung zum Abstapeln plattenförmiger Werkstücke von einem Stapel, gemäß dem Oberbegriff des Anspruchs 1. Eine solche Abstapelungsvorrichtung ist der US 4 431 358 zu entnehmen.

Eine Abstapelungsvorrichtung gemäß der DE 44 33 830 A1 umfasst einen Hubtisch, auf dem ein Stapel mit plattenförmigen Werkstücken ablegbar ist. Der Hubtisch ist in der Höhe relativ zu einer auf einer Seite angeordneten und auch als Gegenhalter bezeichneten Abstreifvorrichtung verstellbar. Je nachdem, um welches Maß die Oberseite des Plattenstapels über die Abstreifvorrichtung übersteht, kann ein mehr oder weniger großer Teilstapel von dem Stapel abgestapelt werden.

Der abgestapelte Teilstapel wird bspw. einer Säge zugeführt, wo er in einzelne kleinere Werkstücke zersägt wird. Zum wirtschaftlichen Betrieb einer solchen Säge ist es erforderlich, dass die Anzahl der der Säge zugeführten plattenförmigen Werkstücke möglichst genau einer gewünschten Anzahl entspricht. Hierzu wird bisher aus der durchschnittlichen Dicke eines Werkstücks und der gewünschten Anzahl der abzustapelnden Werkstücke ein Wert bestimmt, um den der Plattenstapel über die Abstreifvorrichtung überstehen muss. Auch eine zum Abstapeln erforderliche Abschiebevorrichtung wird auf der Basis dieses Werts eingestellt.

JP 59 142685 A beschreibt einen Laser-Entfernungsmesser, der auf die Stirnseite eines Stapels von Stahlplatten gerichtet wird, um deren Anzahl festzustellen. US 4,431,358 offenbart eine Abstapelungseinrichtung mit einem Tastarm, der auf der Oberseite eines Plattenstapels aufliegt. Über den Winkel des Tastarms wird die Höhe des Plattenstapels ermittelt. US 5,040,196 beschreibt einen CCD-Sensor und eine Lichtquelle, die auf die Stirnseite eines Plattenstapels aufgesetzt sind.

Aufgabe der vorliegenden Erfindung ist es, die Zuverlässigkeit und Wirtschaftlichkeit im Betrieb einer solchen Säge zu verbessern.

Diese Aufgabe wird durch eine Abstapelungsvorrichtung mit den Merkmalen des Anspruchs 1 gelöst. Vorteilhafte Weiterbildungen der Erfindung finden sich in Unteransprüchen.

### Vorteile der Erfindung

Bei der erfindungsgemäßen Abstapelungsvorrichtung entspricht die Anzahl der innerhalb eines Teilstapels tatsächlich abgestapelten plattenförmigen Werkstücke mit hoher Genauigkeit einer gewünschten Anzahl. Erfindungsgemäß wurde nämlich erkannt, dass vor allem bei Stapel mit einer großen Anzahl sehr dünner werkstücke bereits geringe Dickentoleranzen der einzelnen Werkstücke zu unterschiedlichen Höhen von Teilstapeln mit an sich gleicher Werkstückanzahl führen. Oder, anders ausgedrückt: Ein Teilstapel mit einer bestimmten Höhe kann im einen Fall eine andere Anzahl von Werkstücken aufweisen als in einem anderen Fall.

Dem wird erfindungsgemäß dadurch begegnet, dass die tatsächliche Anzahl plattenförmiger Werkstücke innerhalb eines abzustapelnden Teilstapels direkt erfasst wird. Dickentoleranzen der einzelnen Werkstücke spielen somit überhaupt keine Rolle mehr. Somit kann die Steuer- und Regeleinrichtung die Abschiebeeinrichtung gemäß einer präzise ermittelten vertikalen Soll-Position ansteuern, in der diese exakt den gewünschten Teilstapel abschiebt.

Mittels eines Sensors wird dabei die tatsächliche Höhe eines eine bestimmte Werkstückanzahl umfassenden Teilstapels ermittelt werden, was wiederum zur Ermittlung bspw. einer Soll-Position des Hubtisches und einer Soll-Position der Abschiebeeinrichtung verwendet werden kann.

Besonders vorteilhaft ist die Verwendung einer optischen Erfassungseinrichtung, da diese quasi verschleißfrei arbeitet und auch bereits bei bestehenden Abstapelungsvorrichtungen nachgerüstet werden kann. Im einfachsten Fall wird der Plattenstapel an der optischen Erfassungseinrichtung vorbeibewegt, die währenddessen die beim Übergang von einem Werkstück zum nächsten erfolgenden Hell/Dunkelübergänge erfasst. Eine noch schnellere Möglichkeit bietet die Verwendung einer Kamera und einer entsprechenden Auswerte- bzw. Bilderkennungseinrichtung. In diesem Fall könnte die Anzahl der Werkstücke eines bestimmten Teilstapels gegebenenfalls auch ohne Bewegung des Hubtisches ermittelt werden.

Wird an drei vorzugsweise in etwa gegenüberliegenden Stellen des Stapels die Anzahl bestimmt, kann auch bei einer starken Welligkeit der Werkstücke ein präzises und genaues Ergebnis erzielt werden.

### Zeichnung

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine schematische Seitenansicht einer Abstapelungsvorrichtung mit einer optischen Erfassungseinrichtung;
- Figur 2: eine Ansicht von oben eines Hubtisches der Abstapelungsvorrichtung von Figur 1 mit einer Mehrzahl optischer Erfassungseinrichtungen; und
- Figur 3: ein von einer optischen Erfassungseinrichtung von Figur 2 erfasstes Bild eines Stapels plattenförmiger Werkstücke.

### Beschreibung des Ausführungsbeispiels

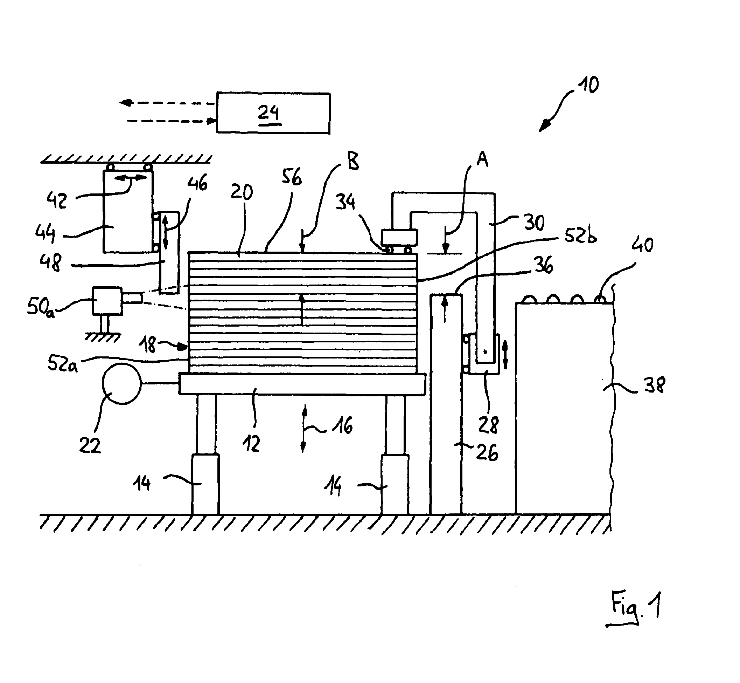

Eine Abstapelungsvorrichtung trägt in Figur 1 insgesamt das Bezugszeichen 10. Sie umfasst einen Hubtisch 12, der mittels hydraulischer Aktoren 14 höhenverstellbar ist (Pfeile 16). Auf dem Hubtisch 12 ist ein Stapel 18 aus plattenförmigen Werkstücken 20 abgelegt. Die Höhe des Hubtisches 12 wird von einem Sensor 22 erfasst, der entsprechende Signale an eine Steuer- und Regeleinrichtung 24 liefert.

In Figur 1 rechts vom Hubtisch 12 ist eine stationäre Abstreifeinrichtung 26 angeordnet. Diese ist entsprechend der DE 44 33 830 A1 ausgebildet. An der Abstreifeinrichtung 26 ist ein vertikal verfahrbarer Schlitten 28 montiert, an dem ein Schwenkarm 30 gelagert ist. An dessen abragendem Ende 32 sind Rollen 34 angeordnet. In einem nicht dargestellten Ausführungsbeispiel könnten an Stelle der Rollen auch Kufen vorgesehen sein. Der Schlitten 28 wird so positioniert, dass zwischen den Rollen 34 und einer Oberseite 36 der Abstreifeinrichtung ein Spalt A definiert wird. In Figur 1 rechts von der Abstreifeinrichtung 26 ist ein Fördertisch 38 mit Förderrollen 40 angeordnet. Dieser führt zu einer in Figur 1 nicht gezeigten Säge.

Auf der von der Abstreifeinrichtung 26 ausgesehen anderen Seite des Hubtisches 12 ist ein horizontal verfahrbarer (Pfeile 42) Programmschieberwagen 44 vorhanden. An diesem ist eine vertikal höhenverstellbare (Pfeile 46) Abschiebeeinrichtung 48 montiert. Die Positionierung des Programmschieberwagens 44, der Abschiebeeinrichtung 48, der Aktoren 14, und des Schlittens 28 erfolgt durch die Steuer- und Regeleinrichtung 24.

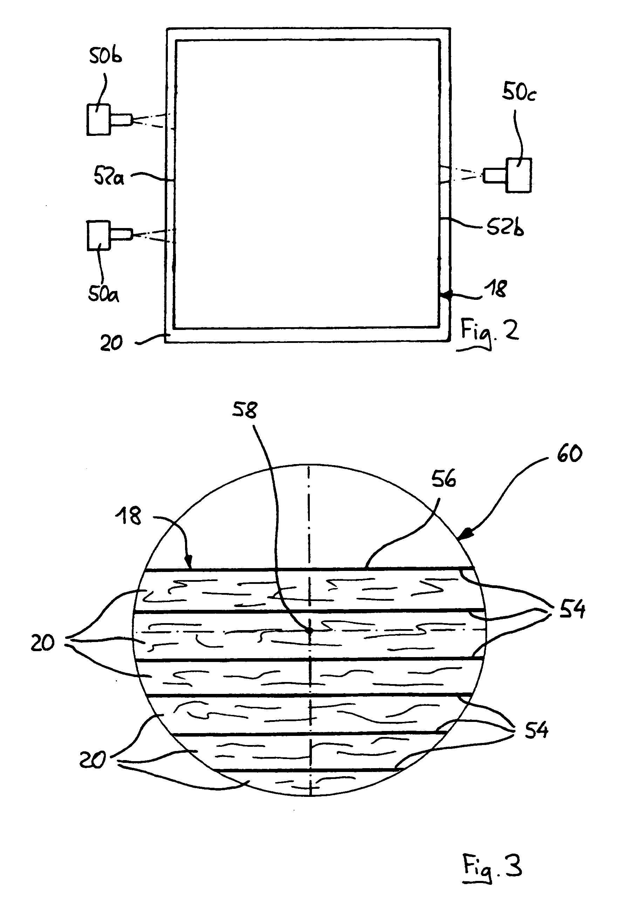

Wie insbesondere aus Figur 2 hervorgeht, sind auf jener Seite des Hubtisches 12, auf der der Programmschieberwagen 44 gezeigt ist, zwei jeweils eine optische Erfassungseinrichtung bildende Kameras 50a und 50b angeordnet, von denen in Figur 1 nur eine gezeichnet ist. Auf der gegenüber liegenden Seite des Hubtisches 12 ist eine weitere Kamera 50c angeordnet, die jedoch aus Gründen der Übersichtlichkeit nur in Figur 2 dargestellt ist. Die Kameras sind auf die seitlichen Ränder 52a bzw. 52b des Stapels 18 gerichtet. In sie ist jeweils eine Auswerteeinrichtung, bspw. in Form eines ASIC, integriert, welche die Anzahl der vertikalen Hell/Dunkelübergänge (Bezugszeichen 54 in Figur 3) auswertet und hieraus die Anzahl der plattenförmigen Werkstücke 20 bestimmt, die beim Anheben des Hubtisches 12 an der jeweiligen Kamera 50a bis 50c vorbeibewegt werden. Dabei ist vorteilhafter Weise in der Auswerteeinrichtung ein typisches Bild einer Seitenansicht eines Stapels 18 abgelegt. Besonders bevorzugt ist es, wenn für unterschiedliche Materialien unterschiedliche Bilder abgelegt sind, die dann mit den tatsächlichen von den Kameras 50a bis 50c erfassten Bildern verglichen werden können.

Die Abstapelungsvorrichtung 10 arbeitet folgendermaßen: Zunächst wird der Hubtisch 12 soweit abgesenkt, dass die Oberseite 56 des Stapels 18 unterhalb der Kameras 50a bis 50c liegt. Dann wird der Hubtisch 12 nach oben bewegt (Pfeile 16 in Figur 1). Sobald die Oberseite 56 des Stapels 18 an einem Fokuspunkt 58 des von einer Kamera 50 erfassten Bildausschnitts 60 (vgl. Figur 3) vorbeiwandert, erfolgt ein Reset des Signals des Sensors 22. Im weiteren Verlauf der Bewegung des Hubtisches 12 wird nun die Anzahl der Hell/Dunkelübergänge 54 von den Kameras 50 erfasst, und gleichzeitig wird der entsprechende Weg des Hubtisches 12 vom Sensor 22 erfasst.

Ist eine bestimmte Soll-Anzahl von Werkstücken 20 erreicht, wird der entsprechende über den Sensor 22 ermittelte Hub des Hubtisches 12 abgespeichert (Wert B in Figur 1) und der Hubtisch 12 so eingestellt, dass sich einerseits zwischen der Oberseite 56 des Stapels 18 und andererseits der Oberseite 36 der Abstreifeinrichtung 26 ein gewünschter Wert A einstellt, so dass nur die Werkstücke 20 des durch den Wert B definierten Teilstapels abgeschoben, der Reststapel aber von der Abstreifeinrichtung 26 zurück gehalten wird. Ebenso wird die vertikale Position der Abschiebeeinrichtung 48 abhängig von dem ermittelten Hubwert so eingestellt, dass die gewünschte Soll-Anzahl von Werkstücken 20 von ihr in Richtung Fördertisch 38 abgeschoben werden kann.

## Patentansprüche

1. Abstapelungsvorrichtung (10) zum Abstapeln plattenförmiger Werkstücke (20) von einem Stapel (18), mit einem Sensor (22), aus dessen Signal die Höhe (H) eines Teilstapels ermittelt werden kann, und mit einer Abschiebeeinrichtung (48), mit der der Teilstapel aus dem Stapel (18) abgeschoben werden kann, **dadurch gekennzeichnet, dass** sie mindestens eine Erfassungseinrichtung (50) zur Erfassung einer Anzahl plattenförmiger Werkstücke (20) innerhalb des Stapels (18) umfasst, der Sensor ein Signal bereitstellt, mit dem die Höhe (H) jenes Teilstapels ermittelt werden kann, dessen Werkstückanzahl erfasst wurde, und sie eine Steuer- und/oder Regeleinrichtung (24) umfasst, in der die ermittelte Höhe (H) des Teilstapels zur Ermittlung einer vertikalen Soll-Position der Abschiebeeinrichtung (48) verwendet wird.

2. Abstapelungsvorrichtung (10) nach Anspruch 1, **dadurch gekennzeichnet, dass** die Erfassungseinrichtung (50) optisch arbeitet.

3. Abstapelungsvorrichtung (10) nach Anspruch 2, **dadurch gekennzeichnet, dass** die Erfassungseinrichtung (50) auf einen seitlichen Rand (52) des Stapels (18) gerichtet ist und bei einer Relativbewegung zwischen Erfassungseinrichtung (50) und Stapel (18) senkrecht zur Werkstückebene die beim Übergang von einem Werkstück (20a) zum nächsten (20b) erfolgenden Hell/Dunkelübergänge (54) erfasst.

4. Abstapelungsvorrichtung (10) nach einem der Ansprüche 2 oder 3, **dadurch gekennzeichnet, dass** die Erfassungseinrichtung eine Kamera (50), die ein Bild bereitstellt, umfasst.

5. Abstapelungsvorrichtung (10) nach einem der Ansprüche 2 bis 4, **dadurch gekennzeichnet, dass** die Erfassungseinrichtung (50) eine Auswerteeinrichtung umfasst, die das Signal der Erfassungseinrichtung (50), insbesondere die Anzahl der vertikalen Hell/Dunkelübergänge (54), auswertet und hieraus die Anzahl der plattenförmigen Werkstücke (20) bestimmt.

6. Abstapelungsvorrichtung (10) nach einem der vorhergehenden Ansprüche, **dadurch gekennzeichnet, dass** sie mindestens drei Erfassungseinrichtungen (50a-c) aufweist, die auf unterschiedliche Bereiche (52a, 52b) des Stapels (18) gerichtet sind.

7. Abstapelungsvorrichtung (10) nach Anspruch 6, **dadurch gekennzeichnet, dass** zwei Erfassungseinrichtungen (50a, 50b) auf eine Seite (52a) des Stapels (18) und die dritte Erfassungseinrichtung (50c) auf die gegenüberliegende Seite (52b) des Stapels (18) gerichtet ist.

## Claims

1. An unstacking device (10) for unstacking panel-shaped workpieces (20) from a stack (18), having a sensor (22), from whose signals the height (H) of a partial stack can be determined, and having a push-off arrangement (48), by means of which the partial stack can be pushed out of the stack (18), **characterized in that** it comprises at least one detection device (50) for detecting a number of panel-shaped workpieces (20) within the stack (18), that the sensor provides a signal, by means of which the height (H) of that partial stack, whose number of workpieces had been detected, is determined, and that it comprises a control and/or regulating arrangement (24), in which the detected height (H) of the partial stack is employed for determining a vertical desired position of the push-off arrangement (48).

2. The unstacking device (10) in accordance with claim 1, **characterized in that** the detection device (50) operates optically.

3. The unstacking device (10) in accordance with claim 2, **characterized in that** the detection device (50) is directed to a lateral edge (52) of the stack (18) and, in the course of a relative movement between the detection device (50) and the stack (18) perpendicularly to the workpiece plane, it detects the light/darkness transitions (54) during the change from one workpiece (20a) to the next (20b).

4. The unstacking device (10) in accordance with one of claims 2 or 3, **characterized in that** the detection device is comprised of a camera (50), which makes an image available.

5. The unstacking device (10) in accordance with one of claims 2 to 4, **characterized in that** the detection device (50) is comprised of an evaluation arrangement, which evaluates the signal from the detection device (50), in particular the number of the light/darkness transitions (54), and from these determines the number of the panel-shaped workpieces (20).

6. The unstacking device (10) in accordance with one of the preceding claims, **characterized in that** it has at least three detection devices (50a to c), which are directed to different areas (52a, 52b) of the stack 18.

7. The unstacking device (10) in accordance with claim 6, **characterized in that** two detection devices (50a, 50b) are directed to one side (52a) of the stack (18), and the third detection device (50c) is directed to the oppositely located side (52b) of the stack (18).

## Revendications

1. Dispositif de désempilage (10) pour désempiler des pièces (20) en forme de plaques disposées dans une pile (18), comportant un capteur (22) dont le signal permet de déterminer la hauteur (H) d'une pile partielle, et comportant un dispositif de séparation (48) permettant de retirer une pile partielle hors de la pile (18), **caractérisé en ce que** ledit dispositif de désempilage comporte au moins un dispositif d'enregistrement (50) destiné à enregistrer un nombre de pièces (20) en forme de plaques à l'intérieur de la pile (18), le capteur délivre un signal qui permet de déterminer la hauteur (H) de la pile partielle dont le nombre de pièces a été enregistré, et ledit dispositif de désempilage comporte un dispositif de commande et/ou de réglage (24), dans lequel la hauteur (H) déterminée de la pile partielle est utilisée en vue de déterminer une position de consigne verticale du dispositif de séparation (48).

2. Dispositif de désempilage (10) selon la revendication 1, **caractérisé en ce que** le dispositif d'enregistrement (50) travaille par voie optique.

3. Dispositif de désempilage (10) selon la revendication 2, **caractérisé en ce que** le dispositif d'enregistrement (50) est dirigé vers un bord latéral (52) de la pile (18) et, en cas de mouvement relatif entre le dispositif d'enregistrement (50) et la pile (18) perpendiculairement au plan des pièces, enregistre les transitions clair/obscur (54) se produisant au moment de la transition d'une pièce (20a) vers la suivante (20b).

4. Dispositif de désempilage (10) selon la revendication 2 ou 3, **caractérisé en ce que** le dispositif d'enregistrement comporte une caméra (50), qui fournit une image.

5. Dispositif de désempilage (10) selon l'une quelconque des revendications 2 à 4, **caractérisé en ce que** le dispositif d'enregistrement (50) comporte un dispositif d'analyse qui analyse le signal du dispositif d'enregistrement (50), en particulier le nombre de transitions clair/obscur (54) verticales et, à partir de là, détermine le nombre de pièces (20) en forme de plaques.

6. Dispositif de désempilage (10) selon l'une quelconque des revendications précédentes, **caractérisé en ce que** ledit dispositif comporte au moins trois dispositifs d'enregistrement (50a-c), qui sont dirigés vers des zones (52a, 52b) différentes de la pile (18).

7. Dispositif de désempilage (10) selon la revendication 6, **caractérisé en ce que** deux dispositifs d'enregistrement (50a, 50b) sont dirigés vers un côté (52a) de la pile (18) et le troisième dispositif d'enregistrement (50c) est dirigé vers le côté (52b) opposé de la pile (18).
